# EUROPEAN PATENT SPECIFICATION

(11) **EP 2 958 471 B1**
(45) Date of publication and mention of the grant of the patent: **14.09.2016**
(21) Application number: 14704639.5
(22) Date of filing: 07.02.2014
(51) Int. Cl.: A47J 43/07

(54) **FOOD PROCESSOR ARRANGEMENTS**
LEBENSMITTELVERARBEITUNGSANORDNUNGEN
SYSTÈMES DE ROBOTS CULINAIRES

(30) Priority: 19.02.2013 GB 201302848
(43) Date of publication of application: 30.12.2015
(73) Proprietor: Kenwood Limited, Havant Hampshire PO9 2NH (GB)
(72) Inventor: FIELDS, Robert, Havant, Hampshire PO9 2NH (GB)
(74) Representative: Hector, Annabel Mary
(86) International application number: PCT/GB2014/050355
(87) International publication number: WO 2014/128435

(56) References cited:
- WO-A1-2012/113106
- FR-A1- 2 962 023

## Description

This invention relates to food processor arrangements and in particular to cutter plates for use in such arrangements.

Cutter plates used for chopping or otherwise comminuting foodstuffs in the bowl of an electrically powered food processor are typically located just beneath the lid of a bowl and close to a feed-tube entry through the lid; the cutter plate being rotated rapidly by means of an extension shaft that runs centrally through the bowl and picks up, through the bottom of the bowl, rotary drive from a motor located in a base of the processor. Usually the bowl sits directly on the base and the cutter comprises a fixed blade, which may be curved or straight and which is pressed out of, or fixedly secured to, a flat, metallic disc. The chopped food typically falls into the bowl through an aperture, formed between the disc and the blade. Many blade configurations have been utilised in such arrangements, and most work quite well, but none has proven entirely satisfactory in operation. In particular, difficulties arise because, in order to allow the user to chop food to differing thicknesses, it is common to provide several cutter plates with differing thicknesses of cut. It is a nuisance for the user to select and fit appropriate plates and moreover the storage of unused plates presents problems.

Document WO-A-2012/113106 discloses a food processor arrangement according to the preamble of independent claim 1.

The present invention aims to address, at least in part, the above-described difficulties.

According to the invention there is provided a food processor arrangement comprising a base housing an electrical drive motor and having a bowl-supporting surface presenting a drive outlet driven from the motor; the surface, in use, supporting a lidded bowl having a central axis along which extends a drive shaft conveying the rotational drive from the outlet to a location proximate the underside of the lid of said bowl; the lid of the bowl being apertured to allow insertion therethrough of foodstuffs to be processed in said bowl and said shaft being adapted to support at said location, for rotation by said drive, a cutter disc bearing a cutting blade for impacting said foodstuffs to effect processing thereof; wherein said cutter disc comprises first and second linked sections configured to permit relative movement therebetween; said sections being adapted for selective manipulation by a user to adopt either an operational condition, wherein said sections co-operate to form said cutter disc, or a storage condition, wherein at least a major part of one of said sections overlies the other.

This enables the first and second sections of the cutter disc to be substantially juxtaposed for storage, thereby significantly reducing the storage footprint of the plates, or secured in alignment to create a complete cutter disc.

In some preferred embodiments of the invention, one of said sections is formed with a boss adapted to be driven by said shaft, and the other of said sections supports a tubular component adapted to fit slidably over said boss.

Further preferably, said tubular component is capable of both linear sliding movement along said axis and limited rotational movement about said axis, relative to said boss.

In some preferred embodiments of the invention, the said section supporting said tubular component further supports an adjuster disc, mounted for rotation on said section about an axis offset from said central axis; said adjuster disc having engagement means co-operative with associated means borne by said boss to control the relative locations of said sections.

Preferably said engagement means and said associated means are adapted to latch said sections together to form said cutter disc for operation, and to delatch said sections and control said linear sliding movement and said limited rotational movement for placement of said sections into the storage condition.

In some preferred embodiments, the engagement means comprises a radially extending flange around the circumference of said adjuster disc and said associated means includes an arcuate slot configured to receive said flange.

In still further preferred embodiments, a cut-out formed in the flange of said engagement means is alignable with said arcuate slot to permit delatching of said sections and said associated means further comprises a relatively broad axially extending slot permitting said linear axial relative movement to occur.

It is further preferred that said associated means still further comprises a circumferentially extending groove permitting said relative rotational movements to occur, whereby the sections can be moved so that one underlies the other.

It is further preferred in some embodiments of the invention to support said flange of said adjuster disc on a peripherally extending wall upstanding from said adjuster disc, wherein said wall is of variable height.

Preferably, the variation in height of said wall conforms to a progressive incline from a minimum to a maximum height, whereby the rotation of said adjuster disc adjusts the relative axial disposition of said sections in the operative condition, thereby permitting an adjustment of the cutting height of said blade.

In some embodiments of the invention, the blade is formed integrally with one of said sections. In other embodiments, the blade is demountable from the section. In still other embodiments, that blade is adapted to be driven in an oscillatory manner relative to the section supporting it in order to enhance its cutting action.

In order that the invention may be clearly understood and readily carried into effect, one embodiment thereof will now be described, by way of example only, with reference to the accompanying drawings, of which:
Figure 1 shows, in perspective and exploded diagrammatic form, certain elements of a food processor arrangement suitable for use with the present invention, to illustrate how such elements typically co-operate in practice;
Figure 2 shows a plan view from above of a cutter disc assembled from two sections, in accordance with one example of the invention;
Figures 3(a) and 3(b) show perspective underside views, taken from opposing directions, of one section of the cutter plate;
Figure 3(c) shows a perspective underside view of the other section of the cutter plate;
Figure 4 shows a detailed view of an adjuster disc mounted on the section shown in Figure 3(c);
Figures 5(a), 5(b) and 5(c) show cross-sectional views through the cutter disc and respectively illustrate, in sequence, movement of one of said sections relative to the other from an operational position through an intermediate position to a storage position;
Figures 6(a) and 6(b) show cross-sectional views through the cutter disc and illustrate how the adjuster disc of Figure 4 can be used to adjust the cutting height of a blade carried by the cutter disc; and
Figures 7(a) through 7(e) show sequential stages in the relative movements of the two disc sections from the operational condition to the storage condition.

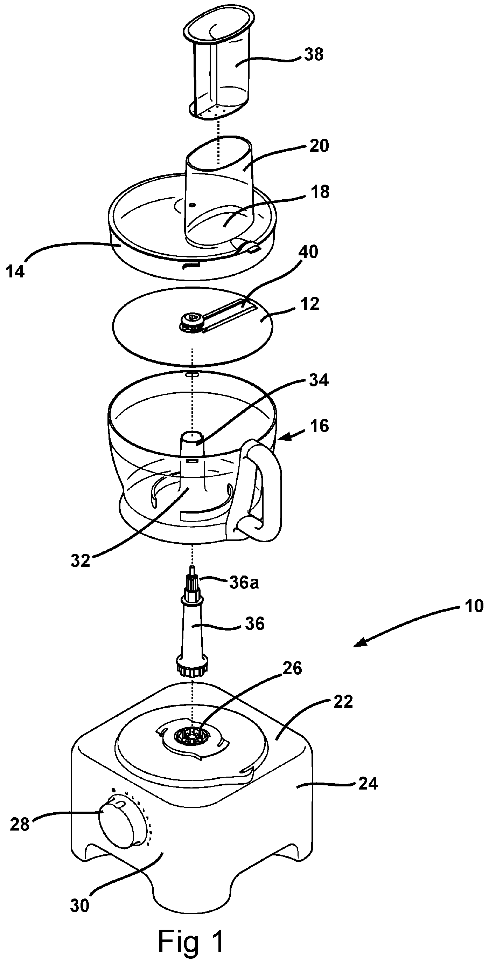

Referring now to Figure 1, a food processor arrangement 10 includes a cutter disc 12 which carries one or more blades 40 and which, in use, is mounted for rotation, closely beneath the lid 14 of a bowl 16, about an axis 12b. The lid 14 has an aperture 18 therein, and carries a feed-tube 20, through which foodstuffs to be processed can be introduced into the bowl 16. The feed-tube 20 is located over said aperture 18, so that foodstuffs can be introduced into the bowl through the tube 20.

The bowl 16 is supported for operation upon an upper surface 22 of a base 24 which contains an electric motor (not shown) and presents a drive outlet 26, coupled to the motor, on its bowl-supporting surface 22 and aligned on the axis 12b.

The speed of the motor and its mode of operation (e.g. continuous or pulsed) is, in this example, controllable by means of a rotatable knob 28 on one of the upright surfaces 30 of the base 24 but it will be appreciated that any convenient form of control can be used. In particular, press-button or touch controls may be used and any directly actuated control provided may, if desired, be supplemented with a remote control facility.

The bottom of the bowl 16 is centrally apertured, as shown at 32, allowing access to the drive outlet 26 on the base 24, and is further, in known manner, integrally formed with an internally re-entrant tube 34 centered on the aperture 32. A drive shaft 36 which, in use, engages the drive outlet 26, extends through the tube 34 along the line of axis 12b, and thus centrally of the bowl 16, to a location close to the underside of the lid 14, where it supports the cutter plate 12 and drives it in rotation by way of splines 36a, which co-operate with similar splines formed in a boss disposed centrally of the disc 12. Rotation of the disc 12 as described allows the blade 40 to act upon and thus process foodstuff urged against it by means of a pusher 38 inserted into the feed-tube 20.

The blade 40 may adopt any of several configurations, including concave, straight and convex with reference to the direction of rotation. The blade may also be disposed substantially radially of the cutting disc 12, as shown in Figure 1, or it may be angled in either direction. Moreover, in any selected configuration, the blade 40 may be fixed on the disc 12, or it may be replaceable (for example to adapt the disc 12 to differing cutting heights) and/or it may be capable of a reciprocating motion, relative to the disc 12, to enhance its cutting performance, for example as described and claimed in our co-pending UK patent application No. GB 1203321.3 (publication No. GB 2499659 A) and/or in its international counterpart application (publication No. WO 2013/128164). In any event, the intention is to have the blade act upon the food stuffs so as to impart a slicing action, the nature and efficiency of which is governed, among other things, by the angle at which the blade attacks the foodstuff and the diameter at which the foodstuff encounters the blade. The disc 12 is apertured, adjacent the blade 40, so that sliced foodstuffs can fall through the aperture and into the bowl 16.

Typical existing cutter discs, however, tend to have a significant storage footprint, and this can cause difficulties, especially when a user needs to house several discs with differing cutter characteristics to provide a wide range of processing capabilities.

One aspect of the present invention addresses part at least of this difficulty by providing cutter discs which can be manipulated by the user into forms exhibiting a significantly smaller footprint size for storage. Moreover, in preferred examples of the invention, such as the one to be described below, the cutting height of the discs is made variable. Further preferred examples of the invention utilise a mechanism for adjusting the cutting height of the disc that interacts with, and shares some components with, the mechanism used to permit manipulation of the disc into storage form as mentioned above.

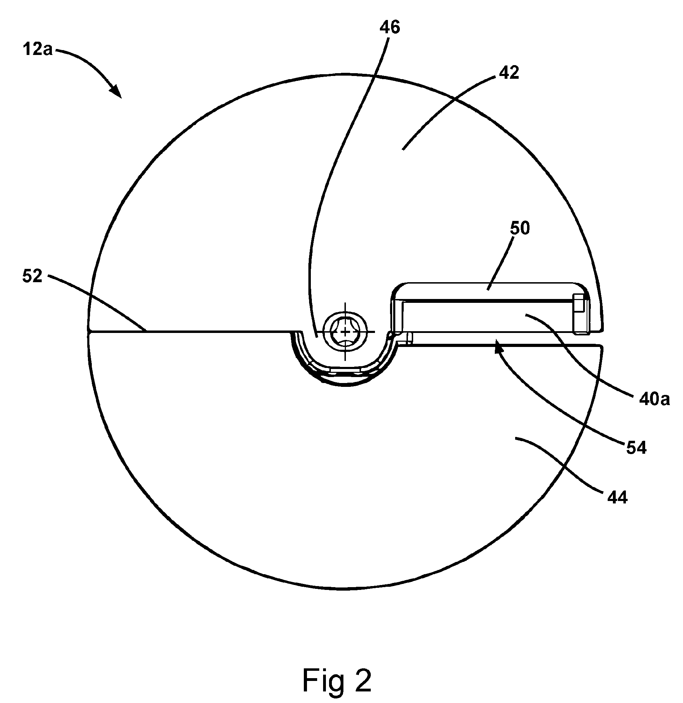

The example of the invention now to be described in detail with reference to Figures 2 et seq. describes one of many possible alternative constructional arrangements, and is provided merely to explain the principles of the invention, without limiting its implementation in any way.

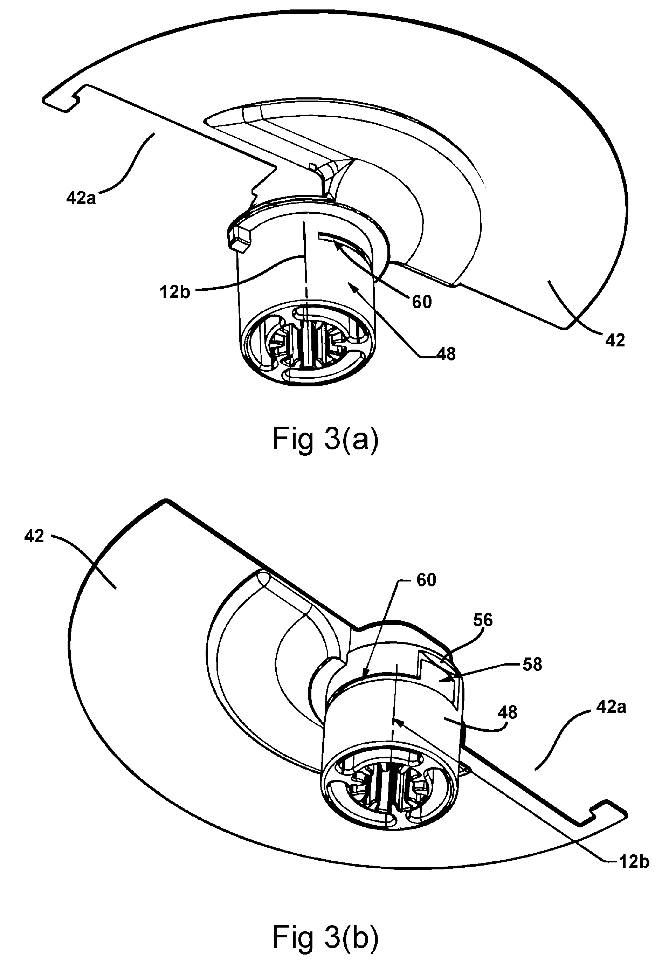

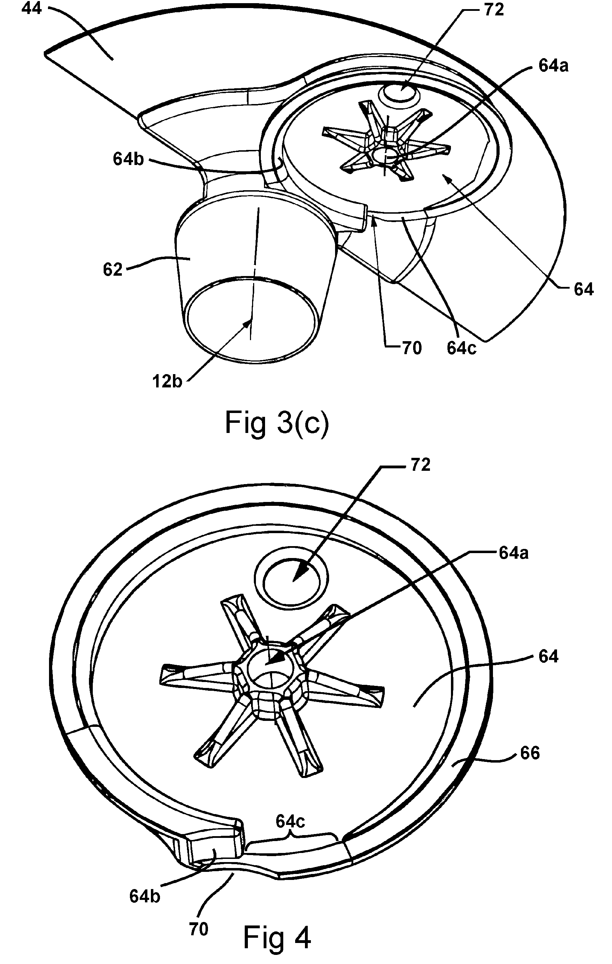

Referring to Figures 2, 3(a), 3(b) and 3(c), the embodiment of the invention in this example utilises a cutter disc 12a formed of two half sections 42 and 44. The disc section 42 is shown in Figures 3(a) and 3(b), and is referred to for convenience hereinafter as the "fixed half, since it incorporates a central portion 46 that supports a splined boss 48 (Figure 3(a)), used to couple the disc 12a to the splined drive shaft 36 (referred to previously) of the food processor 10. As shown in Figure 2, the fixed half 42 of the disc 12a also supports a cutting blade 40a which may be stamped out of the disc, and thus fixed, but which may alternatively be replaceable and/or capable of oscillatory movement relative to the disc 12a, as previously described. The blade in this instance is supported in a carrier frame or so-called cartridge 50 which is made of a food-grade plastics material and which slides tightly into, or snap-fits into, a suitably shaped cut-out 42a formed in one of the radial faces of the fixed half-disc 42. Bearing in mind its intended usage and location, moreover, the cartridge 50 is preferably fabricated to resist the ingress of foodstuffs and in any event is designed without food traps, so as to be easy to clean.

The disc section 44, which will hereinafter be referred to as the "moveable half", is shown in more detail in Figure 3(c), and is designed so that, in its operational position, it is secured to and co-operates with the fixed half 42 to form the fully-sized processor disc 12a. The mechanism for implementing the relative axial and rotational movement between the disc halves 42 and 44 utilised to move them into their overlying position for storage will subsequently be described in detail. In principle, however, the movement is achieved by unlocking the half discs from their operational position, sliding the moveable half 44 axially along the boss 48 of the fixed half 42 and then rotating the moveable half 44 around the boss 48 so that the two half sections 42 and 44 are juxtaposed with one another.

Referring again to Figures 3(a) and 3(b), the boss 48, which is attached to or formed integrally with the region 46 of the fixed half 42 of the cutter disc 12a, is formed with a number of features important to the operation of this embodiment of the invention. Firstly, it is formed with an arcuate cut out 56 communicating with an adjoining, axially and circumferentially extending, and therefore C-shaped, slot 58 cut out of the main circular housing part of the boss 48. The cut-out 56 bites more deeply into the central boss 48 than does the C-shaped slot 58, for a reason that will become clear later. Moreover, the lower part of the slot 58 is extended at one side into a groove 60 running circumferentially around the main circular housing part of the boss 48 and extending for about 180 degrees there-around, in order to accommodate the rotation of one half disc 42 relative to the other 44, thereby enabling the disc halves to be moved into and out of their juxtaposed (storage) position.

Referring now to Figures 3(c) and 4, the moveable half 44 of the cutter disc 12a is formed with or supports a central tube 62 dimensioned to slide easily over the boss 48, and capable of both linear and circular motion along and about the main axis 12b of the cutter disc 12a relative to the boss 48. The moveable half 44 is also provided with an adjuster disc 64 (shown separately in Figure 4) that is user-rotatable, on the disc half 44, about an axis 64a, which is offset from, but parallel to, the axis 12b. The outer periphery of the adjuster disc 64 is formed with a radially-extending flange 66, which is supported on a circumferential wall 64b upstanding from the disc 64. The wall 64b varies in height around the circumference of the disc 64, such that, if it were to be "unwound" from the circumference of disc 64, it would present a gradual ramp, which can be linear or curved; the ramp being used for the aforementioned adjustment of the cutting height of blade 40a, as will be described later.

There is a circumferentially-extending gap 64c in the wall 64a, the gap being located between the lowest and highest points of the wall 64a, and the flange 66 is formed with an arcuate cut out segment 70, of similar diameter to that of the aforementioned "C" shaped cut out 58 in the boss 48 of the fixed half 42 of the disc 12a; the centre of the segment 70 being located at the transition between the gap 64c and the highest point of the wall 64b, as best shown in Figure 4.

When the two half sections 42 and 44 of the disc 12a are fitted together, i.e. with the tube 62 surrounding the boss 48, both half sections share the same major axis 12b. When this is the case and the disc halves are assembled to form the cutter disc 12a, the shapes and configurations of the tube 64 and the boss 48 are designed to ensure that both disc halves are fixed in relation to one another, except for relative movement along the major axis 12b, which is permitted when the cut-out segment 70 formed in the flange 66 of the disc 64 is aligned with the C-shaped cut-out 58 in the boss 48.

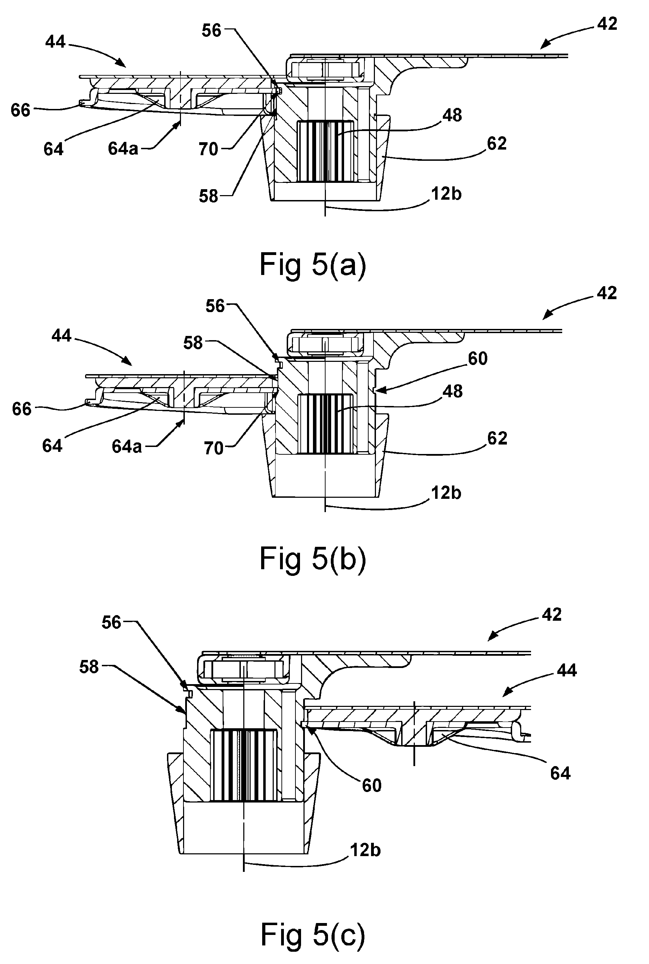

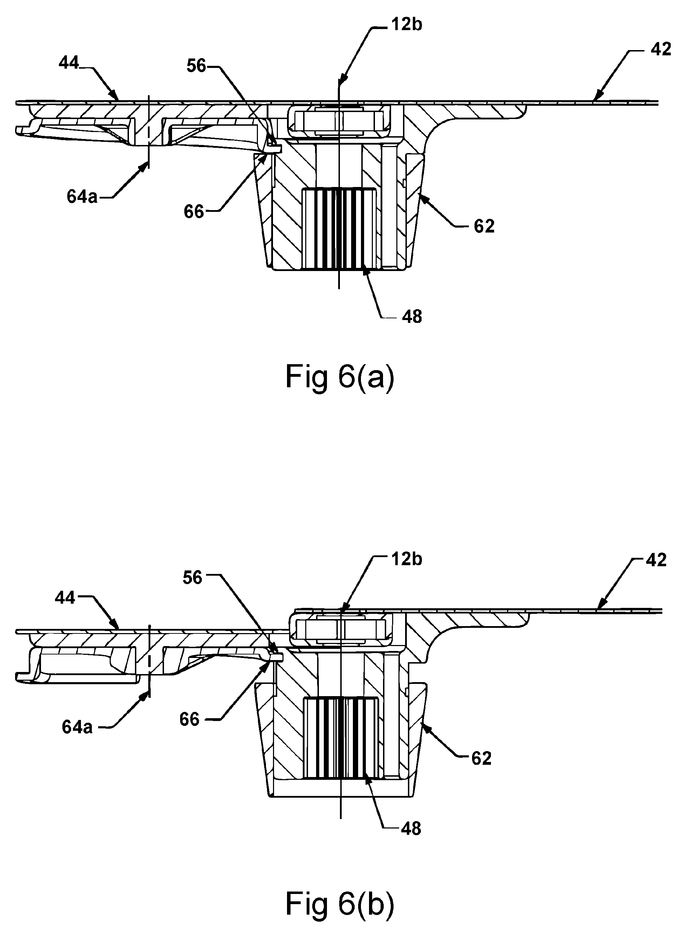

As illustrated in the cross-sectional views of Figures 5(a) and 5(b), manipulation of the adjuster disc 64 about its axis 64a, and thereby of the positioning of the flange 66 or the cut-out 70 therein in the circular cut out 56 in the boss 48, effectively controls the facility for relative movement between the disc halves 42 and 44 along the major axis 12b. The aforementioned adjustment of the cutting height of blade 40a is also achieved by manipulation of the adjuster disc 64, as will be described with reference to Figures 6(a) and 6(b). Reverting to Figures 5(a) and 5(b), however, rotation of the adjuster disc 64, to align the cut out segment 70 with the circular cut out 56 in the fixed boss 48, allows the moving half 44 of the cutter disc 12a to move downwards, along the major axis 12b of the disc 12a as a whole, since the flange 66 no longer protrudes into the arcuate cut out 56. The moving half 44 of the disc 12a is able to move only along the major axis 12b because the cut out segment 70 is constrained within the "C" shaped cut out 58 in the fixed boss 48.

When the moving half 44 of the cutter disc 12a, and therefore the cut out segment 70, reaches the bottom of the "C" shaped cut out 58, the cut out segment 70 is able to rotate about the major axis 12b, as it is now able to move in the circumferentially-extending groove 60. Once the cut out segment 70 is in the groove 60, the moving half 44 of the disc 12a is effectively constrained in position along the major axis with regard to the fixed half 42 thereof.

As the groove 60 extends only for 180 degrees around the fixed boss 48, the moving half 42 of the disc a can only rotate through 180 degrees about the major axis 12b; in doing so effectively rotating so as to lie directly under the fixed half 42 of the disc 12a, as shown in Figure 5(c).

As mentioned above, and as will now be described in more detail with reference to Figures 6(a) and 6(b), and with further reference to Figure 2, this particular embodiment of the invention permits the relative levels of the two sections of the disc 12a to be variably adjusted between an axially aligned position, shown in Figure 6(a) and defining a minimum setting height for the blade 40a, and an axially non-aligned position (shown in Figure 6(b)), at which the disc section 42 is stepped below the disc section 42 by an extent defining a maximum cutting height for the blade 40a. As can be seen in Figure 2, at one side of the disc 12a, the radial faces of the half-discs 42 and 44 are aligned, as shown at 52 and indeed, at the minimum blade height setting shown in Figure 5(a), they abut tightly together, thereby presenting a substantially uninterrupted disc surface. On the other side of the disc 12a, however, part at least of the radial surface of the moving half 44 of the disc is designed to fall short of alignment with the corresponding surface of the fixed half 42, so as to create an aperture 54 adjacent the blade 40a, through which (as previously mentioned) foodstuffs cut by the blade 40a can fall into the processing bowl 16. This gap of course varies in height, depending upon the selected adjustment of the relative levels set between the fixed and moveable halves of the disc 12a.

It will be appreciated that, provided the flange 66 of the adjuster disc 64 extends into the arcuate cut-out 56, adjustment of the relative levels of the disc halves 42 and 44 in the operative (cutting) mode of the disc 12a is set by the orientation of the disc 64 about its axis 64a; a parameter which determines the height of the ramped wall 64b associated with that part of the flange 66 for the time being located in the arcuate cut-out 56.

The adjuster disc 64 is formed with a viewing hole 72 which allows the user to see through to markings (not shown) on the parts underneath that indicate the position of the adjuster disc 64 about axis 64a, and therefore the current thickness of the slice to be cut. This function could alternatively, or in addition, be achieved with marking or an indicator on the lip 66.

In this exemplary embodiment of the invention, the blade height adjustment mechanism and the blade section folding mechanism are performed by inter-related means, but it will be appreciated that the two mechanisms can be performed independently if preferred, and it will further be appreciated that it is possible to provide cutter discs having one or the other mechanism alone.

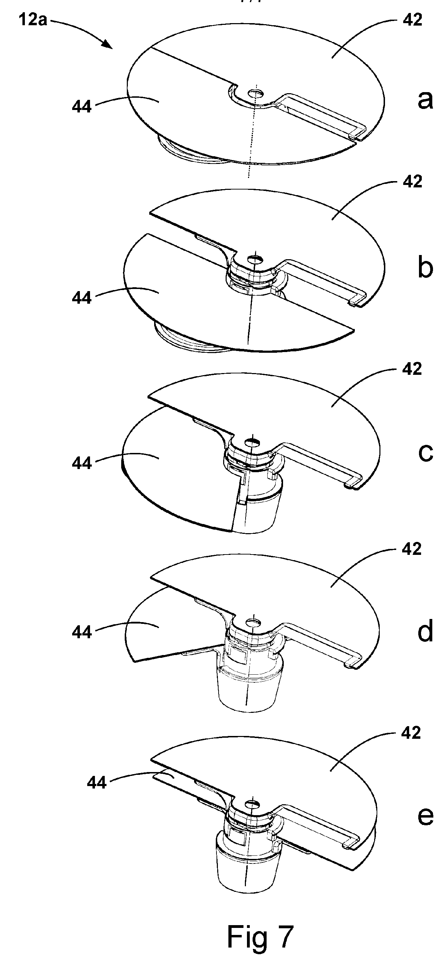

Figures 7(a) through 7(e) show respective stages in the conversion of the disc 12a from its operational position (Figure 7(a)) to its storage position (Figure 7(b)).

## Claims

1. A food processor arrangement (10) comprising a base (24) housing an electrical drive motor and having a bowl-supporting surface (22) presenting a drive outlet (26) driven from the motor; the surface (22), in use, supporting a lidded bowl (16) having a central axis (12b) along which extends a drive shaft (36) conveying the rotational drive from the outlet (26) to a location proximate the underside of the lid (14) of said bowl; the lid (14) of the bowl (16) being apertured to allow insertion therethrough of foodstuffs to be processed in said bowl and said shaft (36) being adapted to support at said location, for rotation by said drive, a cutter disc (12a) bearing a cutting blade (40a) for impacting said foodstuffs to effect processing thereof; **characterised in that** said cutter disc (12a) comprises first and second linked sections (42, 44) configured to permit relative movement therebetween; said sections being adapted for selective manipulation by a user to adopt either an operational condition, wherein said sections (42, 44) co-operate to form said cutter disc (12a), or a storage condition, wherein at least a major part of one of said sections (42, 44) overlies the other.

2. An arrangement according to claim 1, wherein one of said sections (42) is formed with a boss (48) adapted to be driven by said shaft (36), and the other of said sections (44) supports a tubular component (62) adapted to fit slidably over said boss (48).

3. An arrangement according to claim 2, wherein said tubular component (62) is capable of both linear sliding movement along said axis (12b) and limited rotational movement about said axis (12b), relative to said boss (48).

4. An arrangement according to claim 2 or claim 3, wherein the said section (44) supporting said tubular component (62) further supports an adjuster disc (64), mounted for rotation on said section about an axis (64a) offset from said central axis (12b); said adjuster disc (64) having engagement means co-operative with associated means borne by said boss (48) to control the relative locations of said sections (42, 44).

5. An arrangement according to claim 4, wherein said engagement means and said associated means are adapted to latch said sections (42, 44) together to form said cutter disc (12a) for operation, and to delatch said sections (42, 44) and control said linear sliding movement and said limited rotational movement for placement of said sections (42, 44) into the storage condition.

6. An arrangement according to claim 4 or claim 5, wherein the engagement means comprises a radially extending flange (66) around the circumference of said adjuster disc (64) and said associated means includes an arcuate cut-out (56) configured to receive said flange (66).

7. An arrangement according to claim 6, wherein a cut-out (70) formed in the flange (66) of said engagement means is alignable with said arcuate cut-out (56) to permit delatching of said sections (42, 44); and wherein said associated means further comprises a relatively broad axially extending slot (58) permitting said linear axial relative movement to occur.

8. An arrangement according to claim 6 or claim 7, wherein said engagement means further comprises a peripherally extending wall (64b) upstanding from said adjuster disc (64) and supporting said flange (66); and wherein said wall (64b) is of variable height.

9. An arrangement according to claim 8, wherein the variation in height of said wall (64b) conforms to a progressive incline from a minimum to a maximum height, whereby the rotation of said adjuster disc (64) adjusts the relative axial disposition of said sections (42, 44) in the operative condition, thereby permitting an adjustment of the cutting height of said blade (40a).

10. An arrangement according to any of claims 4 to 9, wherein said associated means further comprises a circumferentially extending groove (60) permitting said relative rotational movements to occur, whereby the sections (42, 44) can be moved so that one underlies the other.

11. An arrangement according to any preceding claim, wherein the cutting blade (40a) is formed integrally with one of said sections (42 or 44).

12. An arrangement according to any of claims 1 to 10, wherein the blade (40a) is demountably supported in one of said sections (42 or 44).

13. An arrangement according to any of claims 1 to 10, wherein said cutting blade (40a) is supported by one of said sections (42 or 44) and is adapted to be driven in an oscillatory manner relative to the section supporting it.

## Patentansprüche

1. Lebensmittelverarbeitungsanordnung (10), die eine Basis (24) umfasst, die einen elektrischen Antriebsmotor aufnimmt und eine Schalenstützfläche (22) aufweist, die einen Antriebsausgang (26) aufweist, der von dem Motor angetrieben wird; wobei die Fläche (22) bei Gebrauch eine Deckelschale (16) stützt, die eine Mittelachse (12b) aufweist, entlang derer sich eine Antriebswelle (36) erstreckt, die den Rotationsantrieb von dem Ausgang (26) zu einer Position nahe der Unterseite des Deckels (14) der genannten Schale überträgt; wobei der Deckel (14) der Schale (16) mit Öffnungen versehen ist, um die Eingabe von Lebensmitteln dort hindurch zu ermöglichen, die in der genannten Schale verarbeitet werden sollen, und die genannte Welle (36) dafür ausgelegt ist, an der genannten Position zur Drehung durch den genannten Antrieb eine Messerscheibe (12a) zu stützen, die ein Schneidklinge (40a) trägt, um auf die genannten Lebensmittel einzuwirken und die Verarbeitung davon zu bewirken; **dadurch gekennzeichnet, dass** die genannte Messerscheibe (12a) einen ersten und zweiten verknüpften Abschnitt (42, 44) umfasst, die dafür konfiguriert sind, eine relative Bewegung zwischen diesen zu ermöglichen; wobei die genannten Abschnitte für eine selektive Manipulation durch einen Benutzer ausgelegt sind, um Folgendes anzunehmen: einen Betriebszustand , bei dem die genannten Abschnitte (42, 44) zusammenwirken, um die genannte Messerscheibe (12a) zu bilden, oder einen Lagerzustand, bei dem mindestens ein Großteil einer der genannten Abschnitte (42, 44) über dem anderen liegt.

2. Anordnung nach Anspruch 1, wobei einer der genannten Abschnitte (42) mit einem Vorsprung (48) gebildet ist, der dafür ausgelegt ist, von der genannten Welle (36) angetrieben zu werden, und der andere der genannten Abschnitte (44) ein rohrförmiges Bauteil (62) stützt, das dafür ausgelegt ist, gleitend über den genannten Vorsprung (48) zu passen.

3. Anordnung nach Anspruch 2, wobei das genannte rohrförmige Bauteil (62) Folgendes ausführen kann: eine lineare Gleitbewegung entlang der genannten Achse (12b) und eine begrenzte Drehbewegung um die genannten Achse (12b) im Verhältnis zu dem genannten Vorsprung (48).

4. Anordnung nach Anspruch 2 oder Anspruch 3, wobei der genannte Abschnitt (44), der das genannte rohrförmige Bauteil (62) stützt, ferner eine Einstellscheibe (64) stützt, das zur Drehung auf dem genannten Abschnitt um eine Achse (64a) versetzt von der genannten Mittelachse (12b) montiert ist; wobei die genannte Einstellscheibe (64) ein Eingriffsmittel aufweist, das mit einem zugeordneten Mittel zusammenwirkt, das von dem genannten Vorsprung (48) getragen wird, um die relativen Positionen der genannten Abschnitte (42, 44) zu steuern.

5. Anordnung nach Anspruch 4, wobei das genannte Eingriffsmittel und das genannte zugeordnete Mittel dafür ausgelegt sind, die genannten Abschnitte (42, 44) miteinander zu verriegeln, um die genannte Messerscheibe (12a) für den Betrieb zu bilden, und die genannten Abschnitte (42, 44) zu entriegeln und die genannte lineare Gleitbewegung und die genannte begrenzte Drehbewegung zur Anordnung der genannten Abschnitte (42, 44) in den Speicherzustand zu steuern.

6. Anordnung nach Anspruch 4 oder Anspruch 5, wobei das Eingriffsmittel einen sich radial erstreckenden Flansch (66) um den Umfang der genannten Einstellscheibe (64) umfasst und das genannte zugeordnete Mittel einen bogenförmigen Ausschnitt (56) umfasst, der dafür konfiguriert ist, den genannten Flansch (66) zu empfangen.

7. Anordnung nach Anspruch 6, wobei ein Ausschnitt (70), der in dem Flansch (66) des genannten Eingriffsmittels gebildet ist, mit dem genannten bogenförmigen Ausschnitt (56) ausgerichtet werden kann, um ein Entriegeln der genannten Abschnitte (42, 44) zu ermöglichen; und wobei das genannte zugeordnete Mittel ferner einen verhältnismäßig breiten sich axial erstreckenden Schlitz (58) umfasst, der ermöglicht, dass die genannte lineare axiale relative Bewegung stattfinden kann.

8. Anordnung nach Anspruch 6 oder Anspruch 7, wobei das genannte Eingriffsmittel ferner eine sich peripher erstreckende Wand (64b) umfasst, die von der genannten Einstellscheibe (64) aufrecht hervorsteht und den genannten Flansch (66) stützt; und wobei die genannte Wand (64b) eine variable Höhe aufweist.

9. Anordnung nach Anspruch 8, wobei die Variation der Höhe der genannten Wand (64b) einer progressiven Steigung von einer minimalen zu einer maximalen Höhe entspricht, wodurch die Drehung der genannten Einstellscheibe (64) die relative axiale Anordnung der genannten Abschnitte (42, 44) im Betriebszustand einstellt, wodurch eine Einstellung der Schnitthöhe der genannten Klinge (40a) ermöglicht wird.

10. Anordnung nach einem der Ansprüche 4 bis 9, wobei das genannte zugeordnete Mittel ferner eine sich in Umfangsrichtung erstreckende Nut (60) umfasst, die ermöglicht, dass die genannten relativen Drehbewegungen stattfinden können, wodurch die Abschnitte (42, 44) so bewegt werden können, dass einer unter dem anderen angeordnet ist.

11. Anordnung nach einem der vorhergehenden Ansprüche, wobei die Schneidklinge (40a) einstückig mit einem der genannten Abschnitte (42 oder 44) gebildet ist.

12. Anordnung nach einem der Ansprüche 1 bis 10, wobei die Klinge (40a) in einem der genannten Abschnitte (42 oder 44) demontierbar gestützt wird.

13. Anordnung nach einem der Ansprüche 1 bis 10, wobei die genannte Schneidklinge (40a) von einem der genannten Abschnitte (42 oder 44) gestützt wird und dafür ausgelegt ist, in oszillierender Weise im Verhältnis zu dem Abschnitt, der sie stützt, angetrieben zu werden.

## Revendications

1. Agencement de robot ménager (10) comprenant un socle (24) contenant un moteur d'entrainement électrique et ayant un plan pour poser un récipient (22) présentant une sortie d'entrainement (26) entraînée par le moteur ; le plan (22), en utilisation, supportant un récipient fermé par un couvercle (16) ayant un axe central (12b) le long duquel s'aligne un arbre d'entrainement (36) qui transmet l'entrainement en rotation de la sortie (26) à un emplacement proche du dessous du couvercle (14) dudit récipient ; le couvercle (14) du récipient (16) étant percé pour permettre l'insertion par là même d'aliments à transformer dans ledit récipient et le dit arbre (36) étant adapté pour supporter audit emplacement, afin de lui faire subir une rotation grâce audit arbre, un disque porte-lame (12a) portant une lame tranchante (40a) agissant sur lesdits aliments pour en effectuer la transformation ;
**caractérisé en ce que** ledit disque porte-lame (12a) comprend une première et une deuxième sections reliées (42, 44) configurées pour permettre un mouvement relatif entre les deux ; lesdites sections étant adaptées pour être manipulées de manière sélective par un utilisateur pour adopter soit une condition de fonctionnement, dans laquelle lesdites sections (42, 44) coopèrent pour former ledit disque porte-lame (12a), soit une condition de rangement, dans laquelle au moins une majeure partie de l'une desdites sections (42, 44) se superpose avec l'autre.

2. Agencement selon la revendication 1, dans lequel une desdites sections (42) comporte une saillie (48) adaptée pour être entrainée par un arbre (36), et l'autre desdites sections (44) supporte un composant tubulaire (62) adapté pour s'emboîter en glissant sur ladite saillie (48).

3. Agencement selon la revendication 2, dans lequel ledit composant tubulaire (62) est capable d'effectuer à la fois un mouvement de glissement linéaire le long dudit axe (12b) et un mouvement de rotation limité autour dudit axe (12b), par rapport à la dite saillie (48).

4. Agencement selon la revendication 2 ou la revendication 3, dans lequel ladite section (44) supportant ledit composant tubulaire (62) supporte en outre un disque de réglage (64), monté pour la rotation, sur ladite section, autour d'un axe (64a) décalé par rapport à l'axe central (12b) ; ledit disque de réglage (64) ayant un moyen de s'engager coopérant avec un moyens associé porté par ladite saillie (48) permettant de contrôler les emplacements relatifs desdites sections (42, 44).

5. Agencement selon la revendication 4, dans lequel ledit moyen de s'engager et ledit moyens associé sont adaptés pour accrocher ensemble lesdites sections (42, 44) afin de former ledit disque porte-lame (12a) et de permettre son fonctionnement, et pour décrocher lesdites sections (42, 44) et commander ledit mouvement de glissement linéaire et ledit mouvement limité de rotation pour le positionnement desdites sections (42, 44) en condition de rangement.

6. Agencement selon la revendication 4 ou la revendication 5, dans lequel le moyen de s'engager comprend une bride placée radialement autour de la circonférence dudit disque de réglage (64) et ledit moyen associé comprend une découpe arquée (56) configurée pour recevoir ladite bride (66).

7. Agencement selon la revendication 6, dans lequel une découpe (70) formée dans la bride (66) dudit moyen de s'engager peut s'aligner avec ladite découpe arquée (56) pour permettre de décrocher lesdites sections (42, 44) ; et dans lequel ledit moyen associé comprend en outre une fente relativement large (58) alignée le long de l'axe permettant audit mouvement relatif axial linéaire de se produire.

8. Agencement selon la revendication 6 ou la revendication 7, dans lequel ledit moyen de s'engager comprend en outre une paroi qui s'étend autour de la périphérie (64b) en se dressant à partir dudit disque de réglage (64) et qui supporte ladite bride (66) ; et où ladite paroi (64b) est d'une hauteur variable.

9. Agencement selon la revendication 8, dans lequel la variation de hauteur de ladite paroi (64b) se conforme à une inclinaison progressive comprise entre une hauteur minimum et une hauteur maximum, de sorte que la rotation dudit disque de réglage (64) règle la disposition axiale relative desdites sections (42, 44) dans la condition de fonctionnement, permettant par cela un réglage de la hauteur de coupe de ladite lame (40a).

10. Agencement selon l'une quelconque des revendications 4 à 9, dans lequel ledit moyen de s'engager comprend en outre une rainure (60) tout autour de la circonférence permettant auxdits mouvements de rotation relative, au moyen desquels les sections (42, 44) peuvent se déplacer de manière à ce que l'une se place sous l'autre, de se produire.

11. Agencement selon l'une quelconque des revendications précédentes, dans lequel la lame tranchante (40a) est formée intégralement de l'une desdites sections (42 ou 44)

12. Agencement selon l'une quelconque des revendications 1 à 10, dans lequel la lame (40a) est supportée de manière démontable par l'une desdites sections (42 ou 44).

13. Agencement selon l'une quelconque des revendications 1 à 10, dans lequel la lame tranchante (40a) est supportée par l'une desdites sections (42 ou 44) et est adaptée pour être entrainée d'une manière oscillatoire relativement à la section la supportant.
